# DEMANDE DE BREVET EUROPEEN

(11) **EP 0 974 441 A1**
(43) Date de publication de la demande: **26.01.2000**
(21) Numéro de dépôt: 99401833.1
(22) Date de dépôt: 21.07.1999
(51) Int. Cl.: B29C 45/17, F02F 7/00

(54) **Pièce de cartérisation en matière plastique, son utilisation et son procédé de fabrication**

(30) Priorité: 22.07.1998 FR 9809349
(71) Demandeur: MECAPLAST SAM, MC-98000 Monaco (MC)
(72) Inventeur: Dumont, Marc, 18012 Bordighera (IT)
(74) Mandataire: Debay, Yves

(57) **Abrégé**

La présente invention concerne une pièce de cartérisation en matière plastique.

Cette pièce de cartérisation en matière plastique pour assemblage étanche avec une autre pièce en matière plastique ou non plastique plastique comporte au moins une portion de canal (24) creux dans au moins une paroi de la pièce dont la planéité ou la rigidité doit être renforcée, le ou les canaux (24) creux étant formés par injection de gaz lors du moulage de la pièce, pour répartir la ou les portions de canal creux dans la pièce, uniquement aux endroits nécessaires pour répondre aux caractéristiques demandées, afin d'obtenir l'étanchéité souhaitée.

## Description

La présente invention concerne une pièce de cartérisation, son utililsation et son procédé de fabrication. L'invention s'applique, par exemple, aux pièces sous capot moteur en matière plastique, notamment pour les couvre-culasses de moteurs thermiques, ou encore dans d'autres secteurs pour former un boîtier étanche répondant à certaines conditions d'utilisation.

Il est connu des pièces sous capot moteur de véhicules à moteurs thermiques, celles-ci sont soumises à des vibrations, à une élévation de la température de la pièce due à sa présence plus ou moins proche du moteur et à des conditions de pression ou d'étanchéité particulières.

Lorsqu'on veut envisager l'utilisation des matières plastiques pour de telles pièces de cartérisation, l'homme de métier se heurte à différents problèmes.

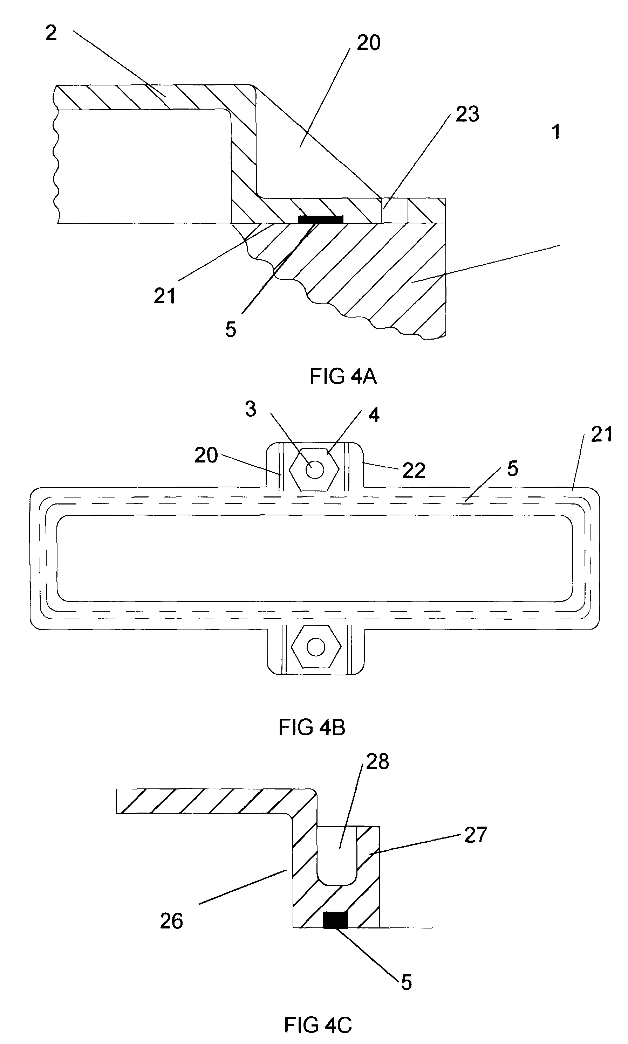

Ainsi comme on peut le voir à la figure 4A, lorsqu'on veut obtenir une bonne étanchéité entre par exemple la culasse (1) et un couvre-culasse (2) réalisé en matière plastique, l'homme de métier prévoit un certain nombre de nervures (20) ou entretoises disposées à intervalles réguliers le long de la périphérie du couvre-culasse. Ces entretoises sont destinées à limiter les problèmes de planéité de la surface de contact (21) en évitant les déformations de cette surface du couvre-culasse avec la culasse (1). Ces déformations sont dues d'une part, aux contraintes internes du matériau plastique incombant au procédé de moulage et d'autre part, à la contre réaction exercée par le joint sur le couvre-culasse. En effet, cette force de contre réaction du joint a tendance dans ce cas à déformer le couvre-culasse en plastique en différents endroits et plus particulièrement, à former une flèche entre les points de fixation du couvre-culasse.

Ceci est d'autant plus vrai que l'homme de métier dans le domaine des véhicules à moteur thermique va rechercher à diminuer le nombre de points de fixation du couvre-culasse sur la culasse en limitant le nombre de goujons (3) solidaires de la culasse et destinés à passer à travers un perçage (23) de la semelle (21) du couvre-culasse pour recevoir un écrou.

L'homme de métier peut donc avoir besoin de rigidifier des parois et d'améliorer la stabilité géométrique des formes et la planéité des pièces dont au moins une est en matière plastique, pour pouvoir être assemblées de façon étanche par l'intermédiaire d'un joint d'une soudure, d'un collage ou d'une fixation mécanique.

Ce but de l'invention est atteint par le fait que la pièce de cartérisation en matière plastique pour assemblage étanche avec une autre pièce en matière plastique ou non plastique est caractérisée en ce qu'elle comporte au moins une portion du canal creux dans au moins une paroi de la pièce dont la planéité ou la rigidité doit être renforcée, le ou les canaaux creux étant formés par injection de gaz lors du moulage de la pièce, pour répartir la ou les portions de canal creux dans la pièce, uniquement aux endroits nécessaires pour répondre aux caractéristiques demandées, afin d'obtenir l'étanchéité souhaitée.

Selon une autre particularité, l'assemblage étanche est obtenu par un joint, une soudure, un collage ou une fixation mécanique.

Un autre but de l'invention est de proposer une utilisation de la pièce ainsi obtenue dans les applications nécessitant une étanchéité avec une autre pièce.

Ce but est atteint par le fait que la pièce de cartérisation selon le but principal a une forme de couvercle dont les bords inférieurs se prolongent par une semelle périphérique pourvue d'une gorge périphérique destinée à recevoir un joint d'étanchéité, la pièce de cartérisation comportant des perçages répartis dans la semelle périphérique pour former les points de fixation du couvercle sur l'autre pièce et caractérisée en ce que le ou les canaux sont situés à la verticale de la gorge périphérique du joint au moins entre les points de fixation.

Selon une autre particularité, la dureté du joint est supérieure à celle d'un joint en matériau alvéolaire.

Selon une autre particularité, le couvercle est monobloc avec un autre élément réalisant une fonction supplémentaire et le ou les canaux contournent cet élément par la portion non adjacente au couvercle.

Selon une autre particularité, le ou les canaux formés au-dessus de la semelle de la pièce sont obtenus-, après avoir rempli totalement le moule de matière plastique et un certain durcissement de la matière au contact des parois du moule, par injection de gaz sous pression en au moins un point de la paroi interne du moule adjacent à la paroi externe du ou des canaux formant le couvercle pour chasser la matière du ou des canaux vers au moins un point d'évacuation de la matière.

Un dernier but de l'invention est de proposer un procédé de fabrication.

Ce but est atteint par le fait que le canal formé au-dessus de la semelle est obtenu par remplissage partiel du moule avec de la matière plastique et par injection de gaz sous pression en au moins un point de la paroi interne du moule formant la paroi externe du ou des canaux formés dans le couvercle en poussant la matière par injection de gaz vers les parois internes du moule.

Selon une autre particularité, le ou les points d'évacuation de la matière sont situés sur la paroi externe opposée du couvercle.

D'autres particularités et avantages de la présente invention apparaîtront plus clairement à la lecture de la description ci-après faite en référence aux dessins annexés dans lesquels :
- la figure 1A représente une vue en coupe selon A d'une utilisation de l'invention dans un couvercle de couvre-culasse ;
- la figure 1B représente une vue de dessus de l'utilisation de l'invention dans un couvercle de couvre-culasse selon la première variante ;
- la figure 1C représente une vue en coupe selon C de l'utilisation de l'invention dans un couvercle de couvre-culasse ;
- la figure 2A représente une vue de côté d'une autre utilisation de l'invention dans une tubulure ;
- la figure 2B représente une vue en coupe de la tubulure ;
- la figure 2C représente une vue de dessus de l'utilisation de l'invention dans une tubulure ;
- la figure 3A représente une vue en coupe d'une variante de réalisation du couvercle de couvre-culasse au niveau des points de fixation ;
- la figure 3B représente une vue en coupe du couvercle selon une autre variante de réalisation au niveau des points de fixation ;
- la figure 3C représente une vue en coupe d'une autre variante de réalisation du couvercle de couvre-culasse au niveau des points de fixation ;
- la figure 3D représente une vue de dessus du couvercle de couvre-culasse avec une fonction de remplissage d'huile ;
- la figure 4A représente une vue en coupe d'un couvre-culasse selon l'art antérieur ;
- la figure 4B représente une vue de dessus d'un couvre-culasse selon l'art antérieur,
- la figure 4C représente une vue en coupe d'un deuxième mode de réalisation de l'art antérieur dans le domaine des couvre-culasses.

Selon l'art antérieur, sur les figures 4A et 4B, les couvre-culasses (2) étaient réalisés en formant à la périphérie des bords latéraux du couvercle (2), une semelle (21) périphérique pourvue d'une gorge pour joint (5). Cette semelle (21) s'étendait vers l'extérieur et comportait à intervalles réguliers des perçages (23) destinés au passage des goujons ou vis (3) de fixation du couvercle sur la culasse (1).

Lorsque les distances entre les points de fixation augmentent, les problèmes de déformation dus à la contre réaction du joint et aux déformations dues au process amenaient les fabricants à réaliser des nervures (20, figures 4A et 4B) disposées à intervalles réguliers pour essayer de compenser les problèmes de déformation.

Une autre solution a consisté également dans l'art antérieur à réaliser une paroi (27) externe parallèle à la paroi (26) formant la périphérie du couvercle, cette paroi (27) externe étant distante de celle-ci et reliée à celle-ci à des intervalles réguliers par des nervures (28) verticales. De cette façon, on arrivait à rigidifier et à conserver épaisseurs constantes à la pièce, mais ceci se faisait au détriment d'une plus grande complexité de l'outil de moulage et des difficultés importantes de mise au point.

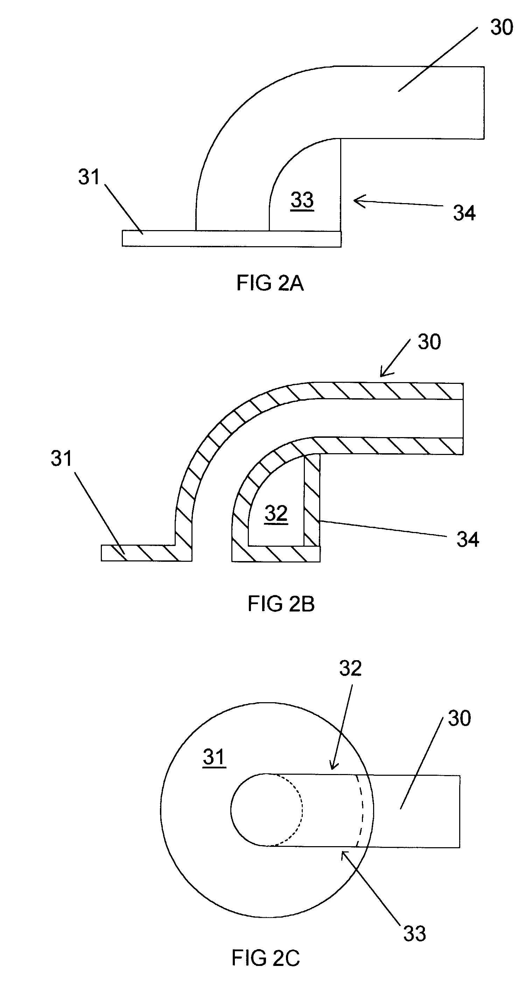

Ceci pouvait donc amener l'homme de métier à complexifier la réalisation de couvre-culasses et de ce fait, réduire ainsi les avantages procurés par l'utilisation de la matière plastique. Ce souci de rigidification ou stabilité de structure peut concerner toute pièce sous capot moteur. De même, dans le cas où l'on fabrique des pièces telles que celles des figures 2 en matière plastique. Ces pièces sont, par exemple, un tube coudé relié à une extrémité à une collerette (31) qui est destiné à être soudé par cette collerette sur une autre pièce identique ou non. Lorsque la pièce n'est pas pourvue des cloisons (32, 33, 34) qui réalisent un canal entre les deux surfaces externes (32, 33), une telle pièce n'a pas une stabilité géométrique importante, surtout si l'on appuie sur l'extrémité rectiligne (30) du tube pour exercer une pression en vue de plaquer la collerette (31) contre la pièce à laquelle le bec doit être soudé. Ainsi, l'invention consiste à créer dans la pièce une ou plusieurs portions de canal entre deux parois externes (32, 33) de la pièce. Le canal est formé par injection de gaz lors du moulage de la pièce avant solidification complète de la matière contenue dans le volume formé par les cloisons (32, 33), la cloison verticale (34) et le coude du tube (30). L'injection de gaz peut se faire, par exemple, par la paroi (33) et la sortie de matière par la paroi (32). Après injection de gaz, la pièce est conformée comme représentéé sur les figures 2A à 2C et comporte un canal creux qui permet une rigidification du bec. Ceci permet, par simple appui sur le coude, de plaquer la collerette (31) avec une force suffisante pour faciliter son soudage à une autre pièce.

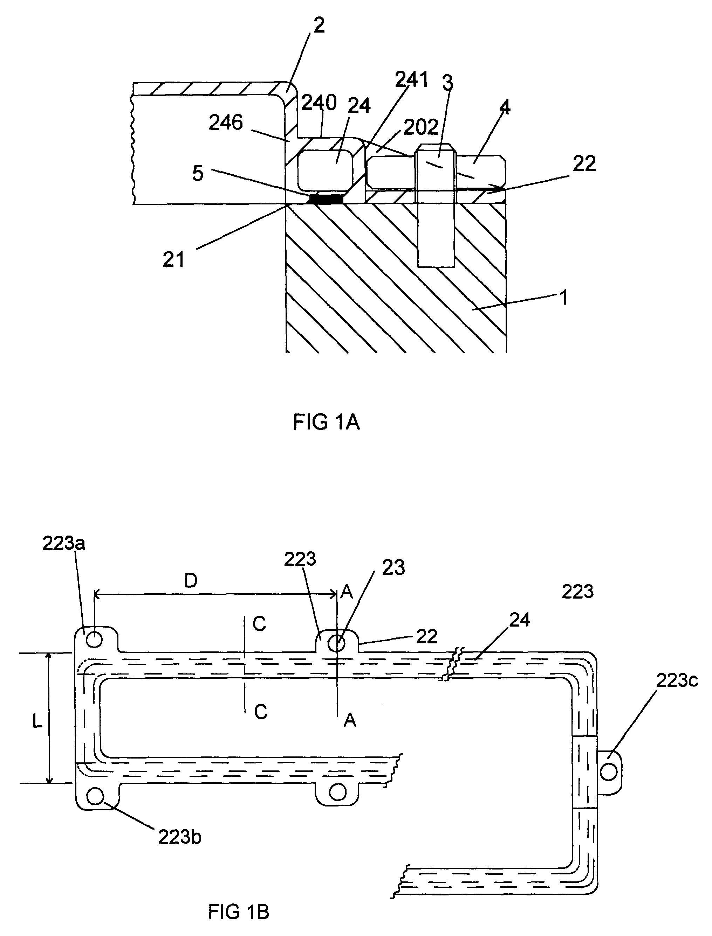

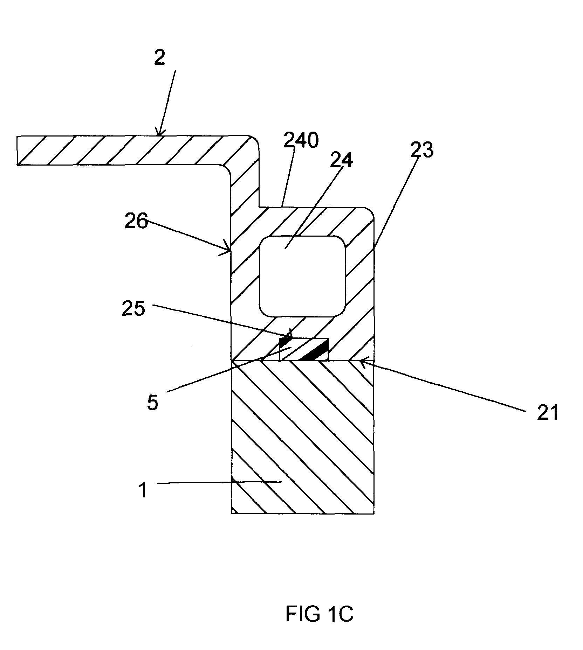

D'autres utilisations de l'invention vont être décrites en liaison avec les figures 1A à 1C.

L'invention est constituée d'un couvercle dont les surfaces latérales internes (26), formées par les parois verticales (246), se prolongent vers la périphérie extérieure par une semelle (21) qui va constituer la surface d'étanchéité avec la culasse (1) d'un moteur. Au-dessus de cette semelle (21), sont réalisées deux surfaces (240, 241) formant une section en L, reliée d'une part par une des extrémités à la semelle (21) et par l'autre extrémité à la paroi verticale (246) qui constitue la surface périphérique interne (26) du couvre-culasse. Les parois (240, 241, 246, 21) ainsi formées délimitent un canal (24) de chaque côté du couvercle qui, comme représenté sur la figure 1B, parcourent le côté de plus grande dimension de la cloison interne (26) du couvercle pour former ainsi un volume creux. A intervalles réguliers correspondant à des distances inférieures à 200 millimètres sont disposées des languettes (22) ou des proéminences dans lesquelles sont formés des perçages (23) constituant des passages de goujons (3) solidaires de la culasse (1) et sur lesquels viennent se fixer des écrous (4) de fixation du couvre-culasse (2) sur la culasse (1).

La portion de semelle (21) située en-dessous du canal (24), comporte une gorge (25) dans laquelle est disposé un joint d'étanchéité annulaire (5). Lorsqu'on met un joint dans un couvre-culasse en matière plastique, la pression, exercée par le couvercle du couvre-culasse sur le joint par le biais des points d'attache, génère une contre réaction de la part du joint qui a tendance à provoquer un flambage des surfaces du couvre-culasse devant assurer l'étanchéité avec la culasse entre les points de fixation. Pour pallier cet inconvénient dans l'invention, la matière du joint sera choisie dans un matériau, tel que, par exemple, un élastomère, dont la dureté peut être inférieure à la dureté de 50 à 60 Shore A généralement utilisée pour les joints d'un couvre-culasse non plastique, mais en tout cas, est supérieure aux duretés des joints alvéolaires. Cette dureté pourra être choisie, par exemple inférieure à 30 à 40 Shore A. Pour une plage de valeurs inférieures à celles de 60 Shore A habituellement utilisées, l'inventeur a constaté que le joint permettait de contribuer à la bonne étanchéité entre la culasse et le couvre-culasse en matière plastique en diminuant les effets de flèche entre les points de fixation. Cette diminution de l'effet de flèche est également due à l'effet de poutre obtenu par la matière plastique formant les canaux (24).

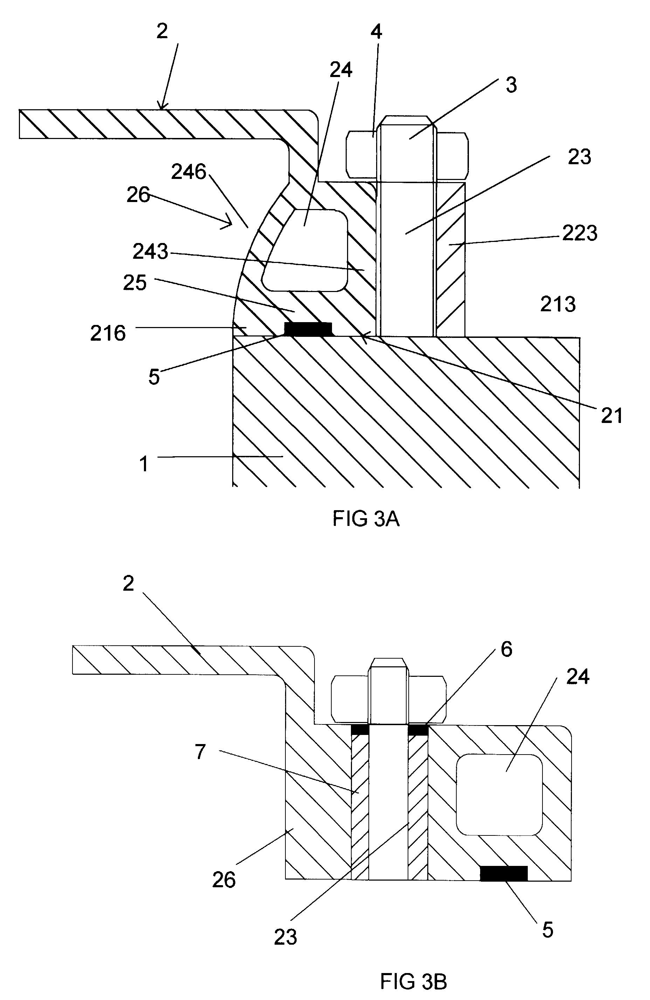

Dans des autres variantes de réalisation selon les figures 3A à 3D, les languettes de prolongation (22) destinées à la fixation du couvre-culasse sur la culasse sont d'une épaisseur plus importante et comportent également des canaux (24) entourant au moins partiellement le perçage (23) en passant, par exemple, comme dans la figure 3B, à l'extérieur du perçage (23) par rapport à la ligne du joint (5) qui reste à l'intérieur par rapport au perçage.

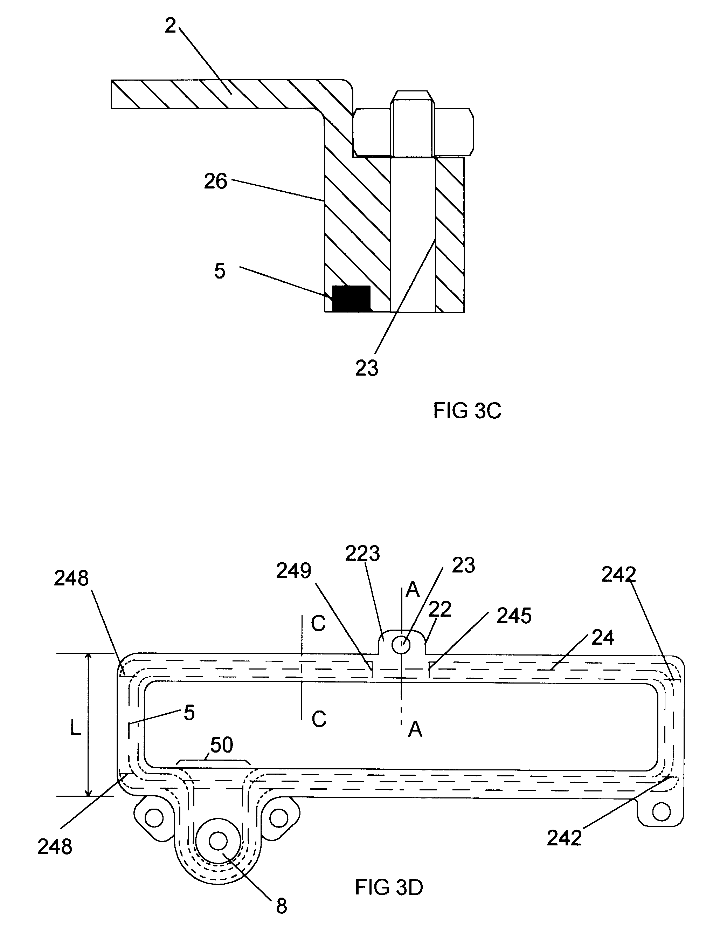

Le canal (24, figure 3B) contourne le perçage (23) par l'extérieur lorsque la place disponible entre les moyens de fixation sur la culasse et les culbuteurs de la culasse qui doivent être couverts par le couvercle (26), ne permet pas à la paroi du couvercle (26) d'être suffisamment large pour aménager la gorge du joint (5) dans la paroi (26) comme représentée à la figure 3C. Dans ce cas, le joint (5) suit le tracé du canal (24, figure 3B), mais les moyens de fixation (3, 4) doivent être pourvus d'une étanchéité formée par un joint annulaire (6) et une douille (7).

En revanche, dans la variante de la figure 3C, comme le tracé du joint (5) reste à l'intérieur par rapport aux points de fixation en suivant une ligne parallèle aux bords internes (26) du couvercle (2), il n'est pas nécessaire de prévoir au niveau des vis de fixation un canal. Comme représenté figure 3D, le canal est constitué de deux portions comportant au niveau des cloisons externes, par exemple, par les points (248, 242) d'injection du gaz et au niveau du perçage (23) et de part et d'autre de celui-ci, les points d'évacuation (respectivement 249, 245) de chacune des portions du canal.

Comme on peut le voir sur la partie gauche de la figure 1B, lorsque le couvercle couvre-culasse concerne une culasse à un seul arbre à came en tête, donc de faible largeur, les points de fixation (223a, 223b) peuvent être de part et d'autre de la largeur du couvercle et dans ce cas, le canal (24) n'existe pas dans la largeur du couvercle. Il suffit de faire arrêter la portion de canal sur les parois externes formant le côté de plus petite largeur, l'entrée du canal (24) se faisant d'un côté et la sortie de la matière de l'autre. Lorsque le couvre-culasse s'adresse à un moteur à double arbre à came en tête comme sur la partie droite de la figure 1B, qui nécessite une plus grande largeur de couvre-culasse, un point de fixation au centre de la largeur (223c) peut être prévu. Mais on peut avoir intérêt à faire venir le canal jusqu'à la vis centrale, de façon que le canal (24) s'arrête de part et d'autre de ce point de fixation sans pour autant former un contour continu.

De même, sur la variante représentée à la figure 3D, on peut voir qu'un couvercle couvre-culasse comporte un canal (24) qui s'arrête aux extrémités (242) des côtés les plus longs du couvre-culasse. Le couvre-culasse comporte, sur par exemple un côté, un élément supplémentaire (8) obtenu directement de moulage en même temps que le couvercle. Cet élément (8) peut réaliser une fonction complémentaire rajoutée sur le couvercle du couvre-culasse telle que, par exemple, le bouchon d'accès pour introduire de l'huile dans le moteur par le biais du circuit d'huile des culbuteurs. Pour résoudre les problèmes de l'art antérieur, cette fonction (8) peut être dans ce cas contournée par le canal (24), laissant ainsi une faible portion (50) d'un côté longitudinal du couvercle couvre-culasse dans laquelle le joint (5) n'est pas surplombé par le canal (24). Dans ce cas, la portion (50) étant de faible dimension, les risques de flambage de la pièce sont pratiquement inexistants.

On comprend que l'on a réalisé ainsi par un procédé de fabrication simple et peu onéreux, utilisant l'injection de gaz sous pression des pièces sous capot moteur présentant des canaux constituant ainsi des poutres de rigidification de la pièce aux endroits intéressants pour obtenir une bonne planéité ou une bonne stabilité géométrique de la semelle (21). L'invention est un moyen de fabriquer, par exemple, des couvre-culasses de façon peu onéreuse tout en garantissant une bonne fonctionnalité d'étanchéité. Ceci permet également d'augmenter la distance entre les points de fixation. La diminution du nombre de points permet ainsi de diminuer le temps d'assemblage des moteurs et également de réduire les coûts, en diminuant le nombre d'éléments de fixation nécessaires, de perçage et de taraudage de la culasse, etc.

A titre d'exemple, on peut appliquer cette invention aux divers types de carters d'étanchéité, tels que les couvre-culasses de moteur, mais aussi à toute fonction assemblée devant être étanche, tels que pompes à liquides ou à air, boîtiers thermostatiques, etc,.

D'autres modifications à la portée de l'homme de métier font également partie de l'esprit de l'invention.

## Revendications

1. Pièce de cartérisation en matière plastique pour assemblage étanche avec une autre pièce en matière plastique ou non plastique caractérisée en ce qu'elle comporte au moins une portion de canal (24) creux dans au moins une paroi de la pièce dont la planéité ou la rigidité doit être renforcée, le ou les canaux (24) creux étant formés par injection de gaz lors du moulage de la pièce, pour répartir la ou les portions de canal creux dans la pièce, uniquement aux endroits nécessaires pour répondre aux caractéristiques demandées, afin d'obtenir l'étanchéité souhaitée.

2. Pièce selon la revendication 1, caractérisée en ce que l'assemblage étanche est obtenu par un joint, une soudure, un collage ou une fixation mécanique.

3. Utilisation de la pièce de cartérisation en matière plastique selon la revendication 1, caractérisée en ce que la pièce de cartérisation (8) a une forme de couvercle dont les bords inférieurs se prolongent par une semelle périphérique (21) pourvue d'une gorge périphérique (25) destinée à recevoir un joint d'étanchéité (5), la pièce de cartérisation (8) comportant des perçages (23) répartis dans la semelle périphérique (21) pour former les points de fixation (223a, 223b) du couvercle sur l'autre pièce (1) et en ce que le ou les canaux (24) sont situés à la verticale de la gorge périphérique ( 25) du joint (5) au moins entre les points de fixation (223a, 223b).

4. Utilisation de la pièce de cartérisation en matière plastique selon la revendication 3, caractérisée en ce que la dureté du joint est supérieure à celle d'un joint en matériau alvéolaire.

5. Utilisation de la pièce de cartérisation en matière plastique selon la revendication 4, caractérisée en ce que le couvercle est monobloc avec un autre élément réalisant une fonction supplémentaire et ou les canaux (24) contournent cet élément par la portion non adjacente au couvercle.

6. Utilisation de la pièce de cartérisation en matière plastique selon la revendication 3 ou 4 ou 5, caractérisée en ce que le ou les canaux (24) formés au-dessus de la semelle (21) de la pièce sont obtenus, après avoir rempli totalement le moule de matière plastique et un certain durcissement de la matière au contact des parois du moule, par injection de gaz sous pression en au moins un point de la paroi interne du moule adjacent à la paroi externe du ou des canaux (24) formant le couvercle pour chasser la matière du ou des canaux vers au moins un point d'évacuation de la matière.

7. Procédé de fabrication de la pièce de cartérisation en matière plastique selon la revendication 3 ou 4, caractérisé en ce que le canal (24) formé au-dessus de la semelle (21) est obtenu par remplissage partiel du moule avec de la matière plastique et par injection de gaz sous pression en au moins un point de la paroi interne du moule formant la paroi externe du ou des canaux (24) formés dans le couvercle en poussant la matière par injection de gaz vers les parois internes du moule.

8. Procédé de fabrication de la pièce de cartérisation en matière plastique selon la revendication 7, caractérisé en ce que le ou les points d'évacuation de la matière sont situés sur la paroi externe opposée du couvercle.
